# EUROPÄISCHE PATENTSCHRIFT

(11) **EP 3 071 618 B1**
(45) Veröffentlichungstag und Bekanntmachung des Hinweises auf die Patenterteilung: **14.06.2017**
(21) Anmeldenummer: 14793806.2
(22) Anmeldetag: 23.10.2014
(51) Int. Cl.: C08G 18/76, C08G 18/18, C08K 5/31, C08G 101/00, C08G 18/48, C09J 175/08, C08G 65/336, C08G 18/50, C08G 18/75

(54) **VERWENDUNG VON GUANIDINUMSETZUNGSPRODUKTEN BEI DER HERSTELLUNG VON POLYURETHANSYSTEMEN**
USE OF GUANIDINIUM REACTION PRODUCTS IN THE PREPARATION OF POLYURETHANE SYSTEMS
UTILISATION DE PRODUITS DE RÉACTION DE COMPOSÉS GUANIDINIUM DANS LA PRÉPARATION DE POLYURÉTHANE.

(30) Priorität: 18.11.2013 DE 102013223444
(43) Veröffentlichungstag der Anmeldung: 28.09.2016
(73) Patentinhaber: Evonik Degussa GmbH, 45128 Essen (DE)
(72) Erfinder: EMMRICH-SMOLCZYK, Eva, 45133 Essen (DE); FIEDEL, Olga, 45131 Essen (DE); VIDAKOVIC, Mladen, 47269 Duisburg (DE)
(86) Internationale Anmeldenummer: PCT/EP2014/072722
(87) Internationale Veröffentlichungsnummer: WO 2015/071063

(56) Entgegenhaltungen:
- WO-A2-2009/117479
- DE-A1-102012 206 193
- US-A1- 2013 065 978

## Beschreibung

Die Erfindung liegt auf dem Gebiet der Polyurethane und betrifft insbesondere ein Verfahren zur Herstellung von Polyurethan-Systemen durch Umsetzung mindestens einer Polyolkomponente mit mindestens einer Isocyanatkomponente in Gegenwart eines oder mehrerer Katalysatoren, die die Reaktionen Isocyanat-Polyol und/oder Isocyanat-Wasser und/oder die Isocyanat-Trimerisierung katalysieren, wobei die Umsetzung in Gegenwart einer oder mehrerer Verbindungen durchgeführt wird, die durch Umsetzung eines Guanidinsalzes mit einem Polyamin, insbesondere einer Verbindung der Formel H₂N-CH₂-CH₂-NH-(CH₂-CH₂-NH)ₓ-CH₂-CH₂-NH₂ (I), mit x = 0 bis 4 erhältlich ist, sowie entsprechend hergestellte Polyurethansysteme.

Polyurethansysteme im Sinne dieser Erfindung sind z. B. Polyurethanbeschichtungen, Polyurethanadhäsive, Polyurethandichtmittel, Polyurethanelastomere oder insbesondere Polyurethanschäume/ -schaumstoffe.

Polyurethanschaumstoffe finden aufgrund ihrer hervorragenden mechanischen und physikalischen Eigenschaften in den verschiedensten Bereichen Verwendung. Einen besonders wichtigen Markt für verschiedenste Typen von PUR-Schäumen, wie konventionelle Weichschäume auf Ether- und Esterpolyolbasis, Kaltschäume (häufig auch als HR-Schäume bezeichnet), Hartschäume, Integralschäume und mikrozellulare Schäume, sowie Schäume deren Eigenschaften zwischen diesen Klassifizierungen liegen, wie z. B. halbharte Systeme, stellt die Automobil- und die Möbelindustrie dar. Es werden z. B. Hartschäume als Dachhimmel, Esterschäume zur Innenverkleidung der Türen sowie für ausgestanzte Sonnenblenden, Kalt- und Weichschäume für Sitzsysteme und Matratzen verwendet.

Problematisch bei der Herstellung und Lagerung von Polyurethanschäumen ist die Freisetzung von Aldehyden, insbesondere von Formaldehyd. Viele Verbraucher wollen wegen gesundheitlicher Bedenken formaldehydfreisetzende Produkte nach Möglichkeit nicht mehr verwenden, unabhängig davon, ob gesundheitliche Bedenken tatsächlich gerechtfertigt sind. Nicht zuletzt deshalb haben in den USA und Europa z.B. die Schaumhersteller der Möbelindustrie ein freiwilliges Programm "CertiPUR" aufgelegt, welches als Standard eine Grenze für die Formaldehydemissionen von 0,1 mg/m³ in Matratzen vorsieht, gemessen Europäische Kammertest erlaubt 5 µg/l an Formaldehyd und DMF in frischen Schäumen und 3 µg/l in Schäumen, die älter als 5 Tage sind.

Es besteht somit sowohl von Verbraucher- wie auch von Industrieseite der Wunsch nach solchen Polyurethanschäumen, welche so wenig wie möglich Formaldehyd freisetzen.

Um diesem Wunsch zu entsprechen, gab es bereits unterschiedliche Ansätze. So geht die WO 2009/117479 davon aus, dass der Formaldehyd aus dem Rohstoff stammt und insbesondere in den eingesetzten Amin-Katalysatoren (tertiären Aminen) enthalten sein soll. Diese Schrift schlägt zum Erreichen niedriger Formaldehyd-Emissionen deshalb vor, dem tertiären Amin-Katalysator ein primäres Amin zuzugeben. Vorzugsweise wird Dimethylaminopropylamin eingesetzt.
DE 10003156 A1 beschäftigt sich nicht unmittelbar mit emissionsarmen Schaumstoffen, sondern mit der Aufgabe, Polymere mit hervorragenden Adsorptionsfähigkeiten für verschiedene Verbindungen, insbesondere für Schwermetallionen zu entwickeln. Zur Lösung dieser Aufgabe werden dann Polyurethanschaumstoffe vorgeschlagen, die Ethylenimin, Polyethylenimin, Polyvinylamin, carboxymethylierte Polyethylenimine, phosphonomethylierte Polyethylenimine, quarternisierte Polyethylenimine und/oder dithiocarbamitisierte Polyethylenimine enthalten. Diese Polyurethanschaumstoffe können auch zur Adsorption organischer Substanzen wie bspw. Formaldehyd eingesetzt werden.

DE 10258046 A1 beschäftigt sich mit der Aufgabe, Polyurethanschaumstoffe herzustellen, die einen reduzierten Gehalt an Formaldehydemission aufweisen. Im Unterschied zu DE 10003156 A1 liegt die Aufgabe der DE 10258046 A1 also in der Reduzierung der Formaldehydemissionen aus dem PUR-Schaumstoff als solchen, und nicht in der Adsorption von Formaldehyd aus der Umgebungsluft. Zur Lösung dieser Aufgabe wird dann ein Verfahren vorgeschlagen, dass die Zugabe von Aminogruppen aufweisenden Polymeren zu dem Polyurethanschaumstoff vorsieht, wobei die Zugabe vor, während oder nach der Herstellung des Polyurethanschaumstoffs erfolgen kann.

DE 102012206193 A1 beschreibt Guanidingruppen aufweisende Polymere und deren Verwendung zur Herstellung von Polyurethansystemen, wobei die Verminderung von Aldehydemissionen erreicht werden kann.

Im Rahmen der vorliegenden Erfindung wurde festgestellt, dass nicht nur die Formaldehydemission eines Polyurethanschaumstoffes problematisch ist, welche mit zunehmender Lagerzeit unter gewöhnlichen Bedingungen, also bei Anwesenheit von Licht und Luft, grundsätzlich steigt. Es konnte darüber hinaus gefunden werden, dass bei Lagerung und insbesondere bei längerer Lagerung eines Polyurethanschaumstoffes auch die Emissionen an Acetaldehyd problematisch werden können, und zwar ausgerechnet dann, wenn zur Formaldehydreduktion auf Polyethylenimine zurückgegriffen wird, wie bisher im Stand der Technik vorgeschlagen.

Ohne spezielle Formaldehydfänger hergestellte Polyurethanschaumstoffe weisen zwar auch eine Acetaldehydemission auf, diese ist in der Regel allerdings sehr geringfügig. Je nach Formulierung kann teilweise auch eine Emission von Benzaldehyd (z.B. bestimmbar analog VDA 278) oder Acrolein (z.B. bestimmbar über diverse Kammertestmethoden) nachgewiesen werden.

Dem Fachmann sind unterschiedliche analytische Methoden zur Bestimmung von Aldehydemissionen bekannt. Beispielhaft seien hier VDA 275, VDA 277 oder auch VDA 278 genannt, ebenso sei auf diverse Kammertestmethoden hingewiesen. VDA ist der Verband der Automobilindustrie (www.vda.de ). "VDA 275" liefert ein Meßverfahren zur Bestimmung der Formaldehydabgabe nach der modifizierten Flaschen-Methode. Ein anwendbares Meßverfahren wird auch im Beispielteil dieser Erfindung genau erläutert.

Überraschenderweise konnte jetzt gefunden werden, dass gerade bei Verwendung der in DE 10003156 A1 und DE 10258046 A1 genannten Verbindungen, wie z.B. der Polyethylenimine, zwar ein positiver Einfluss auf die Formaldehydemission beobachtet werden kann, dieser jedoch leider mit einer überaus drastischen Erhöhung der Acetaldehydemissionen einhergeht, so dass diese z.B. um das 50-fache ansteigt, verglichen mit Systemen ohne Einsatz der genannten Verbindungen, wie z.B. der Polyethylenimine. Ein solch starker Anstieg der Acetaldehydemissionen ist nicht wünschenswert. Denn auch hier bestehen grundsätzliche gesundheitliche Bedenken und außerdem hat der Acetaldehyd einen sehr stechenden Geruch.

Deshalb besteht bei der Bereitstellung von Polyurethanen, insbesondere Polyurethanschäumen, immer noch Bedarf an Lösungen, welche eine Reduzierung der Formaldehydemission ermöglichen, aber keinen so starken Anstieg bei der Acetaldehydemission mit sich bringen.

Aufgabe der vorliegenden Erfindung war deshalb die Bereitstellung von Polyurethanen, insbesondere Polyurethanschäumen, welche eine reduzierte Formaldehydemission aufweisen und bei denen die Acetaldehydemission bei Lagerung nicht so stark steigt, wie dies beim aus dem Stand der Technik bekannten Einsatz von Polyethyleniminen (PEI) der Fall ist.

Überraschenderweise konnte nun gefunden werden, dass bestimmte Umsetzungsprodukte von Guanidinsalzen und Aminen die Lösung dieser Aufgabe ermöglichen. Dabei handelt es sich um die Umsetzungsprodukte eines Guanidinsalzes mit einem Polyamin, insbesondere einem aliphatischen Polyamin. Ein Polyamin im Sinne dieser Erfindung ist unabhängig von ihrer Molmasse eine Verbindung, die zwei oder mehr Amingruppen trägt, insbesondere zumindest 2 primäre Amingruppen aufweist. Es können auch Mischungen unterschiedlicher Amine eingesetzt werden.

Besonders bevorzugte Polyamine im Sinne dieser Erfindung sind Verbindungen der Formel H₂N-CH₂-CH₂-NH-(CH₂₋CH₂₋NH)ₓ-CH₂-CH₂-NH₂ (I), mit x = 0 bis 4, vorzugsweise 1 bis 3, insbesondere 1.

Somit wird die Bereitstellung von Polyurethanen, insbesondere Polyurethanschäumen ermöglicht, welche eine reduzierte Formaldehydemission aufweisen, aber keinen so starken Anstieg bei der Acetaldehydemission zeigen, wie er beim Einsatz von Polyethyleniminen beobachtet wird.

Gegenstand der vorliegenden Erfindung ist somit ein Verfahren zur Herstellung von Polyurethan-Systemen durch Umsetzung mindestens einer Polyolkomponente mit mindestens einer Isocyanatkomponente in Gegenwart eines oder mehrerer Katalysatoren, die die Reaktionen Isocyanat-Polyol und/oder Isocyanat-Wasser und/oder die Isocyanat-Trimerisierung katalysieren, wobei die Umsetzung in Gegenwart einer oder mehrer Verbindungen durchgeführt wird, die durch Umsetzung eines Guanidinsalzes mit einem Polyamin, insbesondere einem aliphatischen Polyamin, erhältlich ist, wobei besonders bevorzugte Polyamine im Sinne dieser Erfindung Verbindungen der Formel H₂N-CH₂-CH₂-NH-(CH₂-CH₂-NH)ₓ-CH₂-CH₂-NH₂ (I), mit x = 0 bis 4, vorzugsweise 1 bis 3, insbesondere 1 sind. Es können auch Mischungen unterschiedlicher Amine eingesetzt werden.

Dieser Gegenstand löst die erfindungsgemäße Aufgabe. Immer dann also, wenn ein Verfahren zur Herstellung von Polyurethan-Systemen in Gegenwart einer oder mehrerer Verbindungen durchgeführt wird, die durch Umsetzung eines Guanidinsalzes mit einem Polyamin, insbesondere einem aliphatischen Polyamin, erhalten werden können, wird die Bereitstellung von Polyurethanen, insbesondere Polyurethanschäumen ermöglicht, welche eine reduzierte Formaldehydemission aufweisen, aber keinen so starken Anstieg bei der Acetaldehydemission zeigen, wie er beim Einsatz von Polyethyleniminen beobachtet wird. Insbesondere wird das Ausmaß der Acetaldehydemission nicht negativ beeinflusst.

Erfindungsgemäß einsetzbare Verbindungen, die durch Umsetzung eines Guanidinsalzes mit einem Polyamin, insbesondere einer Verbindung der Formel H₂N-CH₂-CH₂-NH-(CH₂-CH₂-NH)ₓ-CH₂-CH₂-NH₂ (I), mit x = 0 bis 4, vorzugsweise 1 bis 3, insbesondere 1 erhältlich sind, werden im Folgenden im Sinne dieser Erfindung vereinfacht auch Guanidinumsetzungsprodukte genannt. Diese Guanidinumsetzungsprodukte ermöglichen die Bereitstellung von Polyurethanen, insbesondere Polyurethanschäumen, welche eine reduzierte Formaldehydemission aufweisen, aber keinen so starken Anstieg bei der Acetaldehydemission zeigen, wie er beim Einsatz von Polyethyleniminen beobachtet wird. Insbesondere wird das Ausmaß der Acetaldehydemission bei Einsatz der Guanidinumsetzungsprodukte nicht negativ beeinflusst.

Grundsätzlich können im Sinne dieser Erfindung all jene Guanidinumsetzungsprodukte eingesetzt werden, welche durch die Umsetzung eines Guanidinsalzes mit einem Polyamin erhältlich sind, wobei grundsätzlich auch Polyamine mit einer großen Molmasse eingesetzt werden können, z.B. mit einer Molmasse > 500 g/mol oder >1000 g/mol oder >2000 g/mol usw.

Der Erfindungsgegenstand ermöglicht es, dass sogar bei Lagerung über einen längeren Zeitraum die Emission von Formaldehyd zuverlässig minimiert oder vorteilhafterweise sogar vollständig verhindert werden kann. Dabei kann der starke Anstieg der Acetaldehydemission bei Lagerung, der bei PEI-Einsatz beobachtet wird, so begrenzt werden, dass es zu kaum einer oder gar keiner negativen Beeinflussung der Acetaldehydemission kommt, zumindest aber nicht zu einer so drastischen Erhöhung des Gehalts an Acetaldehyd im Polyurethanschaum um z.B. das 50-fache, wie dies beim Einsatz der PEI der Fall ist. Es wird also zumindest eine deutliche Reduktion des Anstiegs der Acetaldehydemission bei Lagerung erzielt. Insbesondere kann selbst nach einer Lagerung von 5 Monaten die Erhöhung des Gehalts an Acetaldehyd im Polyurethanschaum vorteilhafterweise auf maximal das 2,5-fache begrenzt werden verglichen mit einem Schaum, dem keine Additive zur Verminderung der Formaldehyd Emissionen zugegeben wurden. Dies ist eine ganz erhebliche Verbesserung gegenüber jenen Vorschlägen aus dem Stand der Technik, welche einen PEI-Einsatz beinhalten.

Insbesondere kann durch die vorliegende Erfindung die Emission von Formaldehyd aus dem fertigen Polyurethansystem (insbesondere Polyurethanschaum) auch nach einer Lagerung von 5 Monaten auf einen Wert von vorteilhafterweise maximal 0,02 mg Formaldehyd/kg PU-System (PU-Schaum), vorzugsweise bestimmbar gemäß VDA 275 (gemäß der modifizierten Vorgehensweise im Beispielteil), sicher begrenzt werden.

Das erfindungsgemäße Verfahren ermöglicht somit zum ersten Mal die Bereitstellung von Polyurethansystemen (insbesondere Polyurethanschaum), welche nicht nur mit Blick auf die Formaldehydemission, sondern auch mit Blick auf die Acetaldehydemission sehr gute Resultate liefern. Durch Zugabe der erfindungsgemäßen Guanidinumsetzungsprodukte lassen sich zum ersten Mal Polyurethansysteme (insbesondere Polyurethanschäume) mit verminderten Formaldehydemissionen herstellen, bei denen die Acetaldehydemissionen kaum oder gar nicht negativ beeinflusst werden und bei denen vorzugsweise auch ungewöhnlichere Aldehyde wie z. B. Benzaldehyd oder Acrolein absorbiert werden können.

Ein weiterer Vorteil der Erfindung liegt darin, dass die resultierenden Polyurethansysteme eine biozide oder verbesserte biozide Wirkung als gewöhnliche Polyurethansysteme haben. Ein zusätzlicher Vorteil der Erfindung liegt darin, dass das erfindungsgemäße Verfahren eine beschleunigte Umsetzung der Reaktanten erlaubt verglichen mit Verfahren, bei denen das Guanidinumsetzungsprodukt nicht zum Einsatz kommt.

Die erfindungsgemäß eingesetzten Verbindungen, deren Herstellung, die Verwendung der Verbindungen zur Herstellung der Polyurethansystem bzw. -schäume sowie die Polyurethansystem bzw. -schäume selbst werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-) Formeln verwendet, so können die angegebenen Indizes sowohl absolute Zahlen als auch Mittelwerte darstellen. Bei polymeren Verbindungen stellen die Indizes vorzugsweise Mittelwerte dar.

Die Umsetzung der Guanidinsalze mit dem Polyamin und insbesondere mit den Verbindungen der Formel (I) kann wie im Stand der Technik beschrieben erfolgen. So sind Guanidinumsetzungsprodukte dem Fachmann wohl bekannt. GB657753 beschreibt zwei mögliche Synthesewege, die zu Guanidinumsetzungsprodukten bzw. Derivaten der Guanidinsalze führen. Zum einen erhält man Guanidinumsetzungsprodukte durch Umsetzung einer aminischen Verbindung, wie z.B. Diethylentriamin, mit einem Guanidinsalz, wie z.B. Guanidincarbonat, wobei das Produkt in Salzform anfällt. Eine andere Möglichkeit zu dieser Verbindungsklasse zu gelangen, stellt die Reaktion von Aminen mit Cyanamid oder Dicyandiamid dar, deren Produkte anschließend durch Behandlung mit einer organischen oder anorganischen Säure in die entsprechende Salze überführt werden. Auch die dabei resultierenden Produkte sind Guanidinumsetzungsprodukte im Sinne dieser Erfindung. Wie in EP2300418 beschrieben wird, kann die Umsetzung auch direkt in Gegenwart einer Säure durchgeführt werden, sodass man als Produkt das entsprechende Salz der Alkyl-Guanidinverbindung erhält. Alternativ können Salze der Amine durch eine Reaktion mit Dicyanamid oder Natriumdicyanimid zu Biguanidinen umgesetzt werden. Eine Auflistung weiterer geeigneter synthetischer Methoden findet sich in Ullmann's Encyclopedia of Industrial Chemistry "Guanidine and Derivatives" und im Review von Katritzky et al. (Journal of Organic Chemistry, 2010, p. 76).

Die erfindungsgemäß einsetzbaren Guanidinumsetzungsprodukte kann man vorzugsweise durch Umsetzung eines Guanidinsalzes, insbesondere eines Guanidin-Säureadditionssalzes, mit einem Polyamin bei Temperaturen vorzugsweise zwischen 90-150 °C, einer Reaktionsdauer von vorzugsweise fünf bis 36 Stunden erhalten, wobei das gebildete Ammoniak gegebenenfalls mittels einer Vakuumpumpe aus dem Reaktionsgemisch entfernt werden kann. Da mit dem fortschreitenden Umsatz der Reaktion die Viskosität des Reaktionsgemisches stark ansteigen kann, kann es von Vorteil sein, ein geeignetes Lösungsmittel einzusetzen. Ferner ist es möglich, nach Beenden der Reaktion, dem Produkt Wasser zuzugeben. Je nach Viskosität des Produktes kann die Zugabe bei Raumtemperatur oder bei höheren Temperaturen erfolgen.

Bei der Umsetzung des Guanidinsalzes mit dem Polyamin, insbesondere einer Verbindung der Formel (I), beträgt das molare Verhältnis von Guanidinsalzen zu Polyamin, insbesondere Verbindungen der Formel (I), 5 zu 1 bis 1 zu 5, vorzugsweise 1 zu1 bis 1 zu 3, insbesondere 2 zu 3 bis 1 zu 3. Ein besonders bevorzugtes molares Verhältnis von Guanidinsalzen zu Polyamin ist 1 zu 3 oder 1 zu 2 oder 2 zu 3.

In Abhängigkeit von dem System, in das die Guanidinumsetzungsprodukte später eingearbeitet werden, kann es von Vorteil sein, sie in einem optionalen Folgeschritt zumindest teilweise mit Funktionalisierungsreagenzien umzusetzen, um solche Eigenschaften wie Viskosität, Löslichkeit, Polarität und Mischbarkeit möglichst systemadäquat einzustellen. Als Funktionalisierungsreagenzien können insbesondere alle polymeren und monomeren Stoffe eingesetzt werden, deren funktionelle Gruppen eine Reaktion mit Amingruppen eingehen können wie z.B. Epoxide, Säuren, Alkylhalogenide, Dialkylsulfate usw. Solches Vorgehen ist dem Fachmann an sich bekannt und er kann gewünschtenfalls mit Hilfe weniger Handversuche routinemäßig eine optionale Funktionalisierung einstellen. Der Begriff der Guanidinumsetzungsprodukte umfasst somit also auch die funktionalisierten Guanidinumsetzungsprodukte.

Außerdem können die erfindungsgemäß einsetzbaren Guanidinumsetzungsprodukte durch Zugabe einer Base, wie beispielsweise Natriummethanolat, in das entsprechende basische Guanidinderivat überführt werden, das aufgrund seiner starken Basizität bei der Herstellung des PU-Systems als Katalysator fungieren kann. Auch hierbei handelt es sich um erfindungsgemäß einsetzbare Guanidinumsetzungsprodukte.

Grundsätzlich können alle bekannten Guanidinsalze im Sinne dieser Erfindung umgesetzt werden, wie vorzugsweise Guanidinhydrochlorid, -sulfamat, -phosphat, -acetat, -carbonat, - sulfat, -thiocyanat oder -nitrat. Insbesondere können Guanidinhydrochlorid und/oder Guanidincarbonat als Guanidinsalz eingesetzt werden. Auch die Produkte, die sich in ähnlicher Weise aus der Umsetzung der Biguanidine mit einem Polyamin ergeben, sind Guanidinumsetzungsprodukte im Sinne dieser Erfindung.

Außerdem, wie dem Fachmann z.B. aus WO2008080184 bekannt ist, besteht die Möglichkeit das ursprüngliche Gegenion des derivatisierten Guanidinsalzes (also des Guanidinumsetzungsproduktes) mittels eines Ionenaustauschers durch ein anderes zu ersetzen.

Besonders bevorzugte, im Sinne der Erfindung einsetzbare Guanidinumsetzungsprodukte sind die Verbindungen der Formel (II)

H[-(HN-CH₂-CH₂)ₐ-NH-C(=NHR⁺X⁻)]_{c}-NH-(CH₂-CH₂-NH-)_{b}H (II)

die durch Umsetzung eines Guanidinsalzes mit einer Verbindung der Formel (I) erhältlich sind, mit
a = unabhängig voneinander 0 bis 6, vorteilhafterweise 2 bis 6, vorzugsweise 3 bis 5, insbesondere 3 oder 4,
b = unabhängig voneinander 0 bis 6, vorteilhafterweise 2 bis 6, vorzugsweise 3 bis 5, insbesondere 3 oder 4,
c = unabhängig voneinander 1 bis 4, vorzugsweise 1 oder 2, bevorzugt 1,
R = unabhängig voneinander H oder (CH₂-CH₂-NH-)_{d}H, insbesondere H,
d = unabhängig voneinander 0 bis 6, vorteilhafterweise 2 bis 6, vorzugsweise 3 bis 5, insbesondere 3 oder 4,
a und b können gleich 0 sein, wenn d > 0 und R ungleich H, oder d und b können gleich 0 sein, wenn a > 0, oder d und a können gleich 0 sein, wenn b > 0 ist,
X⁻ = Anion, bevorzugt ein Halogenid, besonders Chlorid.

### Als Anion kann auch CO₃²⁻ füngieren.

Bevorzugte Verbindungen der Formel (II) sind solche, bei denen a = b ist, mit a = b = 2 bis 6, vorzugsweise 3 bis 5, bevorzugt 3 oder 4, besonders bevorzugt 3 und bei denen vorzugsweise X⁻ = Chlorid ist und bei denen vorzugsweise R = H ist und bei denen vorzugsweise c = 1 oder 2 ist. Diese Verbindungen sind insbesondere durch die Umsetzung eines Guanidinsalzes mit einem Polyamin der Formel (I) erhältlich.

Vorzugsweise erfolgt somit die Umsetzung in dem erfindungsgemäßen Verfahren in Gegenwart einer Verbindung der Formel (II)

H[-(HN-CH₂CH₂)ₐ-NH-C(=NHR⁺X⁻)]_{c}-NH-(CH₂-CH₂-NH-)_{b}H (II)

die durch Umsetzung eines Guanidinsalzes mit einer Verbindung der Formel (I) erhältlich sind, mit
a = unabhängig voneinander 0 bis 6, vorteilhafterweise 2 bis 6, vorzugsweise 3 bis 5, insbesondere 3 oder 4,
b = unabhängig voneinander 0 bis 6, vorteilhafterweise 2 bis 6, vorzugsweise 3 bis 5, insbesondere 3 oder 4,
c = unabhängig voneinander 1 bis 4, vorzugsweise 1 oder 2, bevorzugt 1,
R = unabhängig voneinander H oder (CH₂-CH₂-NH-)_{d}H, insbesondere H,
d = unabhängig voneinander 0 bis 6, vorteilhafterweise 2 bis 6, vorzugsweise 3 bis 5, insbesondere 3 oder 4,
a und b können gleich 0 sein, wenn d > 0 und R ungleich H, oder d und b können gleich 0 sein, wenn a > 0, oder d und a können gleich 0 sein, wenn b > 0 ist,
X⁻ = Anion, bevorzugt ein Halogenid, besonders Chlorid.

Bevorzugte Verbindungen der Formel (II) sind solche, bei denen a = b ist, mit a = b = 2 bis 6, vorzugsweise 3 bis 5, bevorzugt 3 oder 4, besonders bevorzugt 3 und bei denen vorzugsweise X⁻ = Chlorid ist und bei denen vorzugsweise R = H ist und bei denen vorzugsweise c = 1 oder 2 ist.

Die nachfolgende Formel (III) gibt beispielhaft eine Verbindung der Formel (II) wieder, bei der X⁻ =Cl⁻, a=b=3, und c=2 und R = H ist:

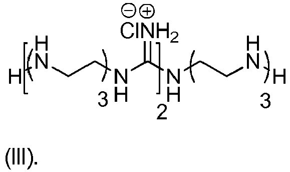

Es entspricht einer besonders bevorzugten Ausführungsform der Erfindung, wenn in dem erfindungsgemäßen Verfahren der Anteil der Verbindungen der Formel (II), darin vorzugsweise mit a = b = 2 bis 6, insbesondere 3 oder 4, mindestens >40 Gew.% an den durch Umsetzung eines Guanidinsalzes mit einer Verbindung der Formel (I) erhältlichen Verbindungen ausmacht. Vorzugsweise beträgt dabei der Anteil der Verbindungen der Formel (II), darin vorzugsweise mit a = b = 2 bis 6, insbesondere 3 oder 4, von 60 bis 80 Gew.%, insbesondere von 90 bis 98 Gew.% bezogen auf die durch Umsetzung eines Guanidinsalzes mit einer Verbindung der Formel (I) erhältlichen Verbindungen.

In einer bevorzugten Ausführungsform der Erfindung wird neben dem Guanidinumsetzungsprodukt zusätzlich noch zumindest ein aliphatisches Polyamin zugesetzt, vorzugsweise mit einer Molmasse kleiner 400, vorteilhafterweise kleiner 300 und insbesondere kleiner 250 g/mol, umfassend vorteilhafterweise zumindest zwei oder mehr Amingruppen, z.B. Diethylentriamin, Triethylentetramin, Tetraethylenpentamin, Pentaethylenhexamin, Hexaethylenheptamin, Hexamethylendiamin, 1,8-Diaminotriethylenglykol, Tris(2-aminoethyl)amin. Das zusätzlich optional zusetzbare aliphatische Polyamin kann beispielsweise in einer Menge von 0,001 bis 10 Gew.%, vorzugsweise 0,01 bis 5 Gew.-%, insbesondere 0,05 bis 3 Gew.% bezogen auf die Polyolkomponente eingesetzt werden.

Die Guanidinumsetzungsprodukte können im Sinne dieser Erfindung auch "in situ" gebildet werden, d.h. die Guanidinumsetzungsprodukte entstehen erst im Verlauf der Reaktion der Polyolkomponente mit mindestens einer Isocyanatkomponente im Rahmen der Herstellung des Polyurethansystems aus den geeigneten Edukten, welche insbesondere Guanidinsalz und Polyamin umfassen. Mit anderen Worten ist also beim erfindungsgemäßen Verfahren auch die Möglichkeit umfasst, dass das Guanidinumsetzungsprodukt erst in der Reaktionsmischung zur Herstellung des Polyurethansystems gebildet wird. Dies entspricht einer bevorzugten Ausführungsform der Erfindung. Es ist aber mehr bevorzugt, dass bereits fertige Guanidinumsetzungsprodukt bei der Herstellung des Polyurethansystems einzusetzen.
Die Herstellung der Polyurethansysteme kann ansonsten auf die übliche Weise und wie im Stand der Technik beschrieben erfolgen. Sie ist dem Fachmann wohlbekannt Eine grundsätzliche Übersicht findet sich z. B. in G. Oertel, Polyurethane Handbook, 2nd edition, Hanser/Gardner Publications Inc., Cincinnati, Ohio, 1994, p. 177-247. Bei der erfindungsgemäßen Herstellung der Polyurethansysteme werden die Guanidinumsetzungsprodukte vorzugsweise in einem Massenanteil von 0,01 bis 20 Teilen, bevorzugt 0,05 bis 5 Teilen und besonders bevorzugt von 0,1 bis 3 Teilen bezogen auf 100 Teile Polyolkomponente eingesetzt.

Bei der Durchführung des erfindungsgemäßen Verfahrens zur Herstellung der Polyurethansysteme kann es vorteilhaft sein, wenn außerdem Wasser, physikalische Treibmittel, Flammschutzmittel und/oder weitere Additive zugegeben werden.

Als Isocyanatkomponente können in dem erfindungsgemäßen Verfahren alle Isocyanate, insbesondere die an sich bekannten aliphatischen, cycloaliphatischen, araliphatischen und vorzugsweise aromatischen mehrwertigen Isocyanate eingesetzt werden. Geeignete Isocyanate im Sinne dieser Erfindung sind vorzugsweise alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch. Besonders bevorzugte Isocyanate sind Mischungen von TDI und MDI.

Als Polyolkomponente geeignete Polyole im Sinne dieser Erfindung sind vorzugsweise alle organischen Substanzen mit mehreren gegenüber Isocyanaten reaktiven Gruppen, sowie deren Zubereitungen einsetzbar. Bevorzugte Polyole sind alle zur Herstellung von Polyurethansystemen, insbesondere Polyurethanschaumstoffen üblicherweise verwendeten Polyetherpolyole und Polyesterpolyole. Die Polyole sind vorzugsweise keine Verbindungen, die mindestens einen 5- oder 6-gliedrigen Ring aufweisen, der aus ein oder zwei Sauerstoffatomen und Kohlenstoffatomen aufgebaut ist.

Polyetherpolyole können z. B. durch Umsetzung von mehrwertigen Alkoholen oder Aminen mit Alkylenoxiden gewonnen werden. Polyesterpolyole basieren vorzugsweise auf Estern mehrwertiger Carbonsäuren (die entweder aliphatisch, beispielsweise Adipinsäure, oder aromatisch, beispielsweise Phthalsäure oder Terephthalsäure, sein können) mit mehrwertigen Alkoholen (meist Glycolen). Zudem können auf natürlichen Ölen basierende Polyether (natural oil based polyols, NOPs) eingesetzt werden. Diese Polyole werden aus natürlichen Ölen wie z.B. Soja- oder Palmöl gewonnen und können unmodifiziert oder modifiziert verwendet werden.
Eine weitere Klasse von Polyolen sind solche, die als Prepolymere durch Umsetzung von Polyol mit Isocyanat in einem Molverhältnis von 100 zu 1 bis 5 zu 1, bevorzugt 50 zu 1 bis 10 zu 1 erhalten werden. Solche Prepolymere werden vorzugsweise gelöst in Polyol eingesetzt, wobei das Polyol bevorzugt dem zur Herstellung der Prepolymeren eingesetzten Polyol entspricht.

Noch eine weitere Klasse von vorzugsweise einsetzbaren Polyolen stellen die sogenannten Füllkörperpolyole (Polymerpolyole) dar. Diese zeichnen sich dadurch aus, dass sie feste organische Füllstoffe bis zu einem Feststoffgehalt von 40 Gew.% oder mehr in disperser Verteilung enthalten. Man kann z.B. unter anderem verwenden:
SAN-Polyole: Dies sind hochreaktive Polyole, welche ein Copolymer auf der Basis Styrol/Acrylnitril (SAN) dispergiert enthalten.
PHD-Polyole: Dies sind hochreaktive Polyole, welche Polyhamstoff ebenfalls in dispergierter Form enthalten.
PIPA-Polyole: Dies sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Der Festkörperanteil, der je nach Anwendung bevorzugt zwischen 5 und 40 Gew.%, bezogen auf das Polyol liegen kann, ist für eine verbesserte Zellöffnung verantwortlich, so dass das Polyol insbesondere mit TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine höhere Härte des Schaums.

Die Formulierungen mit feststoffhaltigen Polyolen sind deutlich weniger eigenstabil und bedürfen daher neben der chemischen Stabilisierung durch die Vemetzungsreaktion eher auch zusätzlich einer physikalischen Stabilisierung.

Je nach Feststoffgehalt der Polyole können diese z.B. alleine oder z.B. in Abmischung mit den oben genannten ungefüllten Polyolen eingesetzt werden.

Ein im Rahmen dieser Erfindung bevorzugtes Verhältnis von Isocyanatkomponente zu Polyolkomponnete, ausgedrückt als Index, liegt im Bereich von 10 bis 1000, bevorzugt 40 bis 350. Dieser Index beschreibt das Verhältnis von tatsächlich eingesetztem Isocyanat zu (für eine stöchiometrische Umsetzung mit Polyol) berechnetem Isocyanat. Ein Index von 100 steht für ein molares Verhältnis der reaktiven Gruppen von 1 zu 1.

Geeignete Katalysatoren, die in dem erfindungsgemäßen Verfahren verwendet werden können, sind vorzugsweise Substanzen, die die Gelreaktion (Isocyanat-Polyol), die Treibreaktion (Isocyanat-Wasser) oder die Di- bzw. Trimerisierung des Isocyanats katalysieren. Typische Beispiele sind Amine, wie z.B. Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnsalze organsicher Carbonsäuren, Zinnverbindungen wie Dibutylzinndilaurat und Kaliumsalze wie Kaliumacetat. Vorzugsweise werden als weitere Katalysatoren solche eingesetzt, die keine organische Zinnverbindungen, insbesondere kein Dibutylzinndilaurat enthalten.

Geeignete Einsatzmengen dieser Katalysatoren im erfindungsgemäßen Verfahren richten sich nach dem Typ des Katalysators und liegen üblicherweise im Bereich von 0,01 bis 5 pphp (= Gewichtsteilen bezogen auf 100 Gewichtsteile Polyol) bzw. 0,1 bis 10 pphp für Kaliumsalze.

Geeignete Wasser-Gehalte im erfindungsgemäßen Verfahren hängen davon ab, ob zusätzlich zum Wasser noch physikalische Treibmittel eingesetzt werden oder nicht. Bei rein Wassergetriebenen Schäumen liegen die Werte typischerweise bei vorzugsweise 1 bis 20 pphp, werden zusätzlich andere Treibmittel eingesetzt, verringert sich die Einsatzmenge auf üblicherweise z.B. 0 oder z.B. 0,1 bis 5 pphp. Zur Erlangung hoher Schaumraumgewichte werden vorzugsweise weder Wasser noch andere Treibmittel eingesetzt.

Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141 b, Sauerstoff-haltige Verbindungen wie Methylformiat und Dimethoxymethan, oder Chlorkohlenwasserstoffe, bevorzugt Dichlormethan und 1,2-Dichlorethan. Des Weiteren eignen sich Ketone (z.B. Aceton) oder Aldehyde (z.B. Methylal) als Treibmittel.

Als Stabilisatoren können die im Stand der Technik genannten Substanzen verwendet werden. Vorteilhafterweise können die erfindungsgemäßen Zusammensetzungen ein oder mehrere Stabilisatoren enthalten. Dabei handelt es sich insbesondere um Kohlenstoffatome aufweisende Siliziumverbindungen, vorzugsweise ausgewählt aus den Polysiloxanen, Polydimethylsiloxanen, organomodifizierten Polysiloxanen, Polyethermodifizierten Polysiloxanen und Polyether-Polysiloxan-Copolymeren.

Als ein oder mehrere Kohlenstoffatome aufweisende Siliziumverbindungen können die im Stand der Technik genannten Substanzen verwendet werden. Vorzugsweise werden solche Si-Verbindungen eingesetzt, die für den jeweiligen Schaumtypen besonders geeignet sind. Geeignete Siloxane sind beispielsweise in den folgenden Schriften beschrieben: EP 0839852, EP 1544235, DE 10 2004 001 408, WO 2005/118668, US 20070072951, DE 2533074, EP 1537159 EP 533202, US 3933695, EP 0780414, DE 4239054, DE 4229402, EP 867465. Die Herstellung der Si-Verbindungen kann wie im Stand der Technik beschrieben erfolgen. Geeignete Beispiele sind z. B. in US 4,147,847, EP 0493836 und US 4,855,379 beschrieben.

Insbesondere können organisch modifizierte Si-Verbindungen eingesetzt werden. Besonders bevorzugte, einsetzbare organisch modifizierte Si-Verbindungen sind z.B. solche gemäß nachfolgender Formel (IV)

Mₖ Dₘ D'ₙ Tₒ Qₚ (IV)

mit
M = [R²R¹₂SiO_{1/2}]
D = [R¹R¹SiO_{2/2}]
D' = [R³R¹SiO_{2/2}]
T = [R¹SiO_{3/2}]
Q = [SiO_{4/2}]
k = 0 bis 22, bevorzugt 2 bis 10, besonders bevorzugt 2
m = 0 bis 400, bevorzugt 0 bis 200, besonders bevorzugt 2 bis 100
n = 0 bis 50, bevorzugt 0,5 bis 20, besonders bevorzugt 0,7 bis 9
o = 0 bis 10, bevorzugt 0 bis 5, insbesondere bevorzugt 0
p = 0 bis 10 bevorzugt 0 bis 5, insbesondere bevorzugt 0
R² = R¹ oder R³
R¹ = unabhängig voneinander Alkyl- oder Arylreste oder H, vorzugsweise Methyl, Ethyl, Propyl oder Phenyl, bevorzugt Methyl oder Phenyl
R³ = organische Modifikationen z.B. Polyether oder ein einwertiger Rest mit 1 bis 30 C-Atomen mit wenigstens einem Heteroatom ausgewählt aus der Gruppe N, S, O, P, F, Cl, Br

Bevorzugt sind R³ in Formel (IV) Reste aus der Gruppe,

-CH₂CH₂CH₂O[CH₂CH₂O]ₐ[CH₂CH(CH₃)O]_{b}[CHR⁴CHR⁴O]_{c}R⁵

-CH₂CH₂CH₂CN

-CH₂CH₂CF₃

-CH₂CH₂CH₂Cl

mit
R⁵ = Alkyl, Aryl, Urethan, Carboxyl, Silyl oder H, bevorzugt H, -Me, oder -C(O)Me
R⁴ = Alkyl, Aryl, die ggf. durch Sauerstoff unterbrochen sein können, insbesondere bevorzugt H, Me, Et oder Ph,
a = 0 bis 100, bevorzugt 0,5 bis 70, besonders bevorzugt 1 - 40
b = 0 bis 100, bevorzugt 0,5 bis 70, besonders bevorzugt 0 - 40
c = 0 bis 50, bevorzugt 0 bis 15, insbesondere bevorzugt 0
   a+b+c>3.

Insbesondere können unmodifizierte Si-Verbindungen eingesetzt werden.
Besonders bevorzugte, einsetzbare unmodifizierte Si-Verbindungen sind z.B. solche der nachfolgenden Formel (V)

M_{q} Dᵣ (V)

mit
M, D wie bei voriger Formel (IV) definiert, und
q = 2
r = 0 bis 50, bevorzugt 1 bis 40, besonders bevorzugt 2 bis 30.

Besonders bevorzugt können die oben genannten Si-Verbindungen, insbesondere der Formel (IV) und/oder (V) einzeln oder in Kombination miteinander eingesetzt werden. In Fall von Mischungen kann zusätzlich ein Kompatibilisator eingesetzt werden. Dieser kann ausgewählt sein aus der Gruppe aliphatischer oder aromatischer Kohlenwasserstoffe, besonders bevorzugt aliphatische Polyether oder Polyester.

Es kann vorteilhaft sein, wenn in den Siloxanverbindungen der Formel (IV) mindestens 10 Äquivalenz-% (und höchstens 50 Äquivalenz-%) der Reste R² Alkyl-Gruppen mit 8 bis 22 Kohlenstoffatomen sind (bezogen auf die Gesamtzahl der Reste R2 in der Siloxanverbindung).

Vorzugsweise können von 0,05 bis 10 Massenteile Siliziumverbindungen pro 100 Massenteile Polyolkomponenten eingesetzt werden.

Insbesondere der Einsatz der vorgenannten Siliziumverbindungen in Kombination mit den erfindungsgemäß einzusetzenden Umsetzungsprodukten ermöglicht sehr gute Resultate im Hinblick auf die erfindungsgemäß angestrebten Polyurethane.

Neben oder an Stelle von Wasser und ggf. physikalischen Treibmitteln, können auch andere chemische Treibmittel, die mit Isocyanaten unter Gasentwicklung reagieren, wie beispielsweise Ameisensäure oder Carbonate in der erfindungsgemäßen Additivzusammensetzung vorhanden sein.

Geeignete optionale Flammschutzmittel im Sinne der vorliegenden Erfindung sind bevorzugt flüssige organische Phosphorverbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Durch das erfindungsgemäße Verfahren können Polyurethansysteme, insbesondere Polyurethanschäume hergestellt werden, die besonders arm an Aldehydemissionen sind._
Die Bezeichnung Polyurethan ist im Sinne der Erfindung insbesondere als Oberbegriff für ein aus Di- bzw. Polyisocyanaten und Polyolen oder anderen gegenüber Isocyanat reaktive Spezies, wie z.B. Aminen, hergestelltes Polymer zu verstehen, wobei die Urethan-Bindung nicht ausschließlicher oder überwiegender Bindungstyp sein muss. Auch Polyisocyanurate und Polyharnstoffe sind ausdrücklich mit eingeschlossen.

Die erfindungsgemäße Herstellung von Polyurethansystemen, insbesondere Polyurethanschaumstoffen bzw. die Herstellung der Polyurethansysteme/Polyurethanschaumstoffe kann nach allen dem Fachmann geläufigen Verfahren erfolgen, beispielsweise im Handmischverfahren oder bevorzugt mit Hilfe von Hochdruck- oder Niederdruck-Verschäumungsmaschinen. Das erfindungsgemäße Verfahren kann kontinuierlich oder diskontinuierlich durchgeführt werden. Eine diskontinuierliche Durchführung des Verfahrens ist bevorzugt bei der Herstellung von Formschäumen, Kühlschränken oder Paneelen. Eine kontinuierliche Verfahrensführung ist bei der Herstellung von Dämmplatten, Metallverbundelementen, Blöcken oder bei Sprühverfahren bevorzugt.

In dem erfindungsgemäßen Verfahren können die erfindungsgemäß verwendeten Guanidinumsetzungsprodukte vorzugsweise direkt vor oder aber auch erst während der Reaktion (zur Ausbildung der Urethanbindungen) zugemischt werden. Bevorzugt erfolgt die Zusammenführung/Zudosierung der Verbindung in einem Mischkopf, sowie auch in einem Batchverfahren für fertige Polyolsysteme.

Die erfindungsgemäßen Polyurethansysteme können vorzugsweise 0,001 bis 10 Gew.-%, vorteilhafterweise 0,01 bis 5 Gew.%, insbesondere 0,1 bis 3 Gew.% bezogen auf die Gesamtzusammensetzung des Polyurethansystems, Guanidinumsetzungsprodukte, insbesondere an Verbindungen der Formel (II), aufweisen.

Die erfindungsgemäßen Polyurethansysteme können vorzugsweise eine Polyurethanschaum, insbesondere z. B. ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum, bevorzugt ein Polyurethan HR-Schaum sein.

Die erfindungsgemäßen Polyurethansysteme, bevorzugt Polyurethanschäume, können z. B. als Kühlschrankisolierung, Dämmplatte, Sandwichelement, Rohrisolation, Sprühschaum, 1- & 1,5-Komponenten-Dosenschaum (ein 1,5-Komponenten-Dosenschaum ist ein Schaum der durch zerstören eines Behälters in der Dose erzeugt wird), Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber oder zur Herstellung entsprechender Produkte verwendet werden.

Ein weiterer Gegenstand der Erfindung ist eine Zusammensetzung zur Herstellung von Polyurethanschaum, umfassend wenigstens einen Urethan- und/oder Isocyanurat-Katalysator, wenigstens ein Treibmittel, wenigstens eine Isocyanatkomponente und wenigstens eine Polyolkomponente, wobei als Additiv eine oder mehrere Verbindungen enthalten sind, die durch Umsetzung eines Guanidinsalzes mit einem Polyamin, insbesondere einer Verbindungen der Formel (I) H₂N-CH₂-CH₂-NH-(CH₂-CH₂-NH)ₓ-CH₂-CH₂-NH₂
mit x = 0 bis 4, vorzugsweise 1 bis 3, insbesondere 1, erhältlich sind.

Der Begriff der Zusammensetzung in diesem Sinne umfasst auch Mehrkomponentenzusammensetzungen, bei denen zwei oder mehr Komponenten zu mischen sind, um eine chemische Reaktion zu erzeugen, welche zur Herstellung von Polyurethanschaum führt. Der Begriff der Zusammensetzung in diesem Sinne umfasst insbesondere das Gemisch (Mischung) wenigstens eines Urethan- und/oder Isocyanurat-Katalysators, wenigstens eines Treibmittels, wenigstens einer Isocyanatkomponente und wenigstens einer Polyolkomponente sowie eines erfindungsgemäßen Guanidinumsetzungsproduktes.

Eine bevorzugte erfindungsgemäße Zusammensetzung zur Herstellung von Polyurethanschaum kann Polyol z.B. in Mengen von 25 bis 75 Gew.-%, Wasser z.B. in Mengen von 1 bis 7 Gew.-%, Katalysator z.B. in Mengen von 0,05 bis 3 Gew.-%, physikalisches Treibmittel z.B. in Mengen von 0 bis 25 Gew.-% (z.B. 0,1 bis 25 Gew.-%), Stabilisatoren (wie z. B. Si-haltige und nicht Si-haltige, insbesondere Si-haltige und nicht Si-haltige organische Stabilisatoren und Tenside) z.B. in Mengen von 0,3 bis 5 Gew.-%, Isocyanat z.B. in Mengen von 20 bis 50 Gew.% und das erfindungsgemäß einzusetzende Guanidinumsetzungsprodukt z.B. in Mengen von 0,00001 bis 5 Gew.% (vorzugsweise 0,00005 bis 2,5 Gew.-%), enthalten.

Bezüglich bevorzugter Ausführungsformen dieser vorgenannten Zusammensetzungen wird insbesondere mit Blick auf das einzusetzende Guanidinumsetzungsprodukt auf die vorangegangene Beschreibung verwiesen.

Ein weiterer Gegenstand der Erfindung ist ein Verfahren zur Erniedrigung der Aldehydgesamtemission, vorzugsweise umfassend Emissionen von Formaldehyd, Acetaldehyd, Acrolein, sowie auch aromatischen Aldehyden, wie Benzaldehyd, vorteilhafterweise Aldehydemissionen umfassend Formaldehyd, Acetaldehyd, Acrolein und Benzaldehyd, insbesondere Aldehydemissionen umfassend Formaldehyd und Acetaldehyd aus Polyurethansystemen (insbesondere Polyurethanschaumstoffen) durch Zugabe von Guanidinumsetzungsprodukten, wie zuvor beschrieben, zu dem Polyurethansystem (insbesondere Polyurethanschaumstoff), vorzugsweise in einer Menge von 0,001 bis 10 Gew.-%, vorteilhafterweise 0,01 bis 5 Gew.%, insbesondere 0,1 bis 3 Gew.% bezogen auf das Gesamtgewicht des Polyurethansystems (insbesondere Polyurethanschaumstoffs), wobei die Zugabe vor, während oder nach der Herstellung des Polyurethansystems (insbesondere des Polyurethanschaumstoffs) erfolgen kann.

Ein weiterer Gegenstand der Erfindung ist ein Polyurethansystem (insbesondere Polyurethanschaumstoff), enthaltend Guanidinumsetzungsprodukte, wie zuvor beschrieben, in einer Menge von vorzugsweise 0,001 bis 10 Gew.%, vorteilhafterweise 0,01 bis 5 Gew.-%, insbesondere 0,1 bis 3 Gew.% bezogen auf das Gesamtgewicht des Polyurethansystems (insbesondere Polyurethanschaumstoffs), insbesondere erhältlich durch Zugabe der Guanidinumsetzungsprodukte vor, während oder nach der Herstellung des Polyurethansystem, insbesondere Polyurethanschaumstoffs.

Ein weiterer Gegenstand der Erfindung ist die Verwendung von Guanidinumsetzungsprodukten, wie zuvor beschrieben, zur Herstellung von Polyurethanschaumstoffen, die emissionsarm bezüglich Aldehyden sind, vorzugsweise umfassend Formaldehyd, Acetaldehyd, Acrolein und Benzaldehyd, insbesondere emissionsarm bezüglich Formaldehyd und Acetaldehyd sind.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

**Tabelle 1: Rohstoffe zur Herstellung der Schaumformteile**

| | |
|---|---|
| Polyol 1 | Polyetherol trifunktionell, MW 6000, Bayer Material Science AG |
| Polyol 2 | Polyetherol trifunktionell, MW 4500, Dow Chemicals |
| Vernetzer | Tegoamin DEOA 85 (Diethanolamin 85% in Wasser), Evonik Industries AG |
| Katalysator | Tegoamin ZE1 (1,1'-{[3-(dimethylamino)propyl]imino}bispropan-2-ol), Evonik Industries AG |
| Silikonstabilisator | Tegostab B 8734 LF 2, Evonik Industries AG |
| Isocyanat | Methylendiisocyanat, Suprasec 6506, NCO=29,3%, Huntsman |

**Tabelle 2: Verwendete Additive**

| Additiv | Beschreibung |
|---|---|
| Additiv 1 | Dimethylaminopropylamin (DMAPA), Huntsman |
| Additiv 2 | DETA:GHC= 3:1 |
| Additiv 3 | PEHA:GHC=3:2 |
| Additiv 4 | PEHA:GHC=2:1 |
| Additiv 5 | Lupasol PR 8515 (Polyethylenimin; durchschnittliches Molekulargewicht von 2000), |
| | BASF Ludwigshafen |

DETA:GHC 3:1 Umsetzungsprodukt Diethylentriamin mit Guanidinhydrochlorid im molaren Verhältnis 3:1
PEHA:GHC=3:2 Umsetzungsprodukt Pentaethylenhexamin mit Guanidinhydrochlorid im molaren Verhältnis 3:2
PEHA:GHC=2:1 Umsetzungsprodukt Pentaethylenhexamin mit Guanidinhydrochlorid im molaren Verhältnis 2:1

### Beispiel 1: Herstellung von Polyurethan-Schäumen:

Die Durchführung der Verschäumungen erfolgte im Handmischverfahren. Dazu wurden Polyol, Vernetzer, Katalysator, Additiv, Wasser und Silikonstabilisator in einen Becher eingewogen und mit einem Flügelrührer 60s bei 1000 Upm vorgemischt. Anschließend wurde das Isocyanat zugegeben und bei einer Rührerdrehzahl von 2500 Upm 7s eingerührt. Das Reaktionsgemisch wurde in eine auf 57°C temperierte Kastenform (Abmessungen 40x40x10cm) eingefüllt und verschlossen. Der fertige Schaum wurde nach 3,5 Minuten entformt. Die verwendeten Einsatzmengen und Edukte können Tabelle 3 entnommen werden.

Die nach dem oben beschriebenen Verfahren hergestellten Formschäume wurden dann in Anlehnung an die VDA 275 (VDA 275 "Formteile für den Fahrzeuginnenraum - Bestimmung der Formaldehydabgabe". Messverfahren nach der modifizierten Flaschen-Methode; Quelle: VDA 275, 07/1994, www.vda.de) auf ihren Formaldehyd- und Acetaldehydgehalt analysiert.

### Messprinzip

Bei der Methode wurden Probekörper einer bestimmten Masse und Abmessung über destilliertem Wasser in einer geschlossenen 11-Glasflasche befestigt und bei konstanter Temperatur über eine definierte Zeit gelagert. Danach kühlte man die Flaschen ab und bestimmte im destillierten Wasser den absorbierten Formaldehyd und Acetaldehyd. Die ermittelte Formaldehyd- und Acetaldehydmenge wurde auf trockenes Formteilgewicht bezogen (mg/kg).

### Analytik

Prüfkörper: Probenvorbereitung, Probenahme und Probekörperabmessungen
Nach dem Entformen der Schäume wurden diese 24 Stunden bei 21°C und ca. 50% relativer Luftfeuchte gelagert. Es wurden dann Probekörper gleichmäßig verteilt über die Breite des (abgekühlten) Formteils an geeigneten und repräsentativen Stellen entnommen. Danach wurden die Schäume in eine Aluminium-Folie eingeschlagen und in einem Polyethylenbeutel versiegelt.

Die Größe der Probekörper betrug jeweils 100x40x40mm Dicke (ca. 9g). Pro Formteil wurden 3 Probekörper für die Aldehydbestimmung entnommen.

Durchführung der Prüfung: Formaldehyd-/Acetaldehydabgabe
Direkt nach Erhalt der versiegelten Probekörper wurden diese der Direktbestimmung zugeführt. Die Proben wurden vor Beginn der Analyse auf der Analysenwaage auf 0,001g genau ausgewogen. In die verwendeten Glasflaschen wurden jeweils 50 ml destilliertes Wasser pipettiert. Nach Anbringung der Probekörper in der Glasflasche wurde das Gefäß geschlossen und über 3 Stunden im Wärmeschrank bei einer konstanten Temperatur von 60°C verwahrt. Nach Ablauf der Prüfzeit wurden die Gefäße aus dem Wärmeschrank genommen. Nach 60 Minuten Standzeit bei Raumtemperatur wurden die Probekörper aus der Prüfflasche entfernt. Anschließend erfolgte die Derivatisierung nach der DNPH-Methode (Dinitrophenylhydrazin). Dazu werden 900 µl der Wasserphase mit 100µl einer DNPH Lösung versetzt. Die DNPH-Lösung ist wie folgt hergestellt: 50mg DNPH in 40mL MeCN (Acetonitril) werden mit 250 µL HCl (1:10 verd.) angesäuert und auf 50 mL mit MeCN aufgefüllt. Nach der erfolgten Derivatisierung wird eine Probe mittels HPLC analysiert. Es erfolgt eine Auftrennung in die einzelnen Aldehyd-Homologen.

### Geräteparameter HPLC

Es wurde das folgende Gerät für die Analyse verwendet:
Agilent Technologies 1260
Chromatographiesäule: Phenomenex Luna 250*4,6mm C18,5µ Teilchengröße
Laufmittel: Wasser Acetonitril Gradient
Detektion: UV 365 nm

**Tabelle 3: Formulierung zur Herstellung der Formteile und Ergebnisse der Form- und Acetaldehydmessungen**

| Beispiele | V1 | V2 | EM1 | EM2 | EM3 | V3 | V4 |
|---|---|---|---|---|---|---|---|
| Polyol 1 | 100 | 100 | 100 | 100 | 100 | 100 | 100 |
| Polyol 2 | 3,5 | 3,5 | 3,5 | 3,5 | 3,5 | 3,5 | 3,5 |
| Wasser | 3,1 | 3,1 | 3,1 | 3,1 | 3,1 | 3,1 | 3,1 |
| Vernetzer | 0,6 | 0,6 | 0,6 | 0,6 | 0,6 | 0,6 | 0,6 |
| Katalysator | 1,1 | 1,1 | 1,1 | 1,1 | 1,1 | 1,1 | 1,1 |
| Silikonstabilisator | 0,7 | 0,7 | 0,7 | 0,7 | 0,7 | 0,7 | 0,7 |
| Isocyanat Index 84 | 44,36 | 44,36 | 44,36 | 44,36 | 44,36 | 44,36 | 44,36 |
| | | | | | | | |
| Ohne Additiv | x | | | | | | |
| Additiv 1 | | 1,0 | | | | | |
| Additiv 2 | | | 1,0 | | | | |
| Additiv 3 | | | | 1,0 | | | |
| Additiv 4 | | | | | 1,0 | | |
| Additiv 5 | | | | | | 1,0 | 2,0 |
| Formaldehydemissionen ppm (VDA 275, mod.) | 1,47 | 1,48 | 0,00 | 0,00 | 0,00 | 0,00 | 0,00 |
| Blindwert Formaldehyd / ppm | 0,02 | | | | | | |
| Acetaldehydemissionen ppm (VDA275, mod.) | 0,12 | 0,24 | 0,14 | 0,13 | 0,14 | 5,70 | 6,67 |
| Blindwert Acetaldehyd / ppm | 0,07 | | | | | | |

Die Verschäumergebnisse zeigen, dass bei Zusatz des Additives 1 keine Änderung der Formaldehydemissionen (V2) erreicht wird im Vergleich zum Nullschaum ohne Additiv (V1). Zu beobachten ist außerdem, dass sich der Acetaldehydgehalt erhöht. Bei Zugabe der erfindungsgemäßen Additive 2 (EM1), 3 (EM2) und 4 (EM3) zeigt sich eine positive Wirkung in Form einer Verringerung der auftretenden Formaldehydemissionen, die an der Nachweisgrenze liegt, sowie kein negativer (ansteigender/erhöhender) Einfluss auf die Acetaldehydemissionen. Wird im Gegenzug das Additiv 5 verwendet, ein klassisches PEI, liegen die Formaldehydemissionen zwar auch an der Nachweisgrenze, allerdings lässt sich hier ausgeprägt der negative Effekt auf die Acetaldehydemissionen erkennen, die bei einer vergleichbaren Einsatzmenge etwa fünfzigfach höher sind (V3). Wird die Menge des Additives erhöht (V4), verstärkt sich dieser Trend sogar noch weiter. Das PEI- Additiv hat demnach einen dramatisch schlechten Einfluss auf die Acetaldehydemission, die infolgedessen ein inakzeptables Niveau erreicht.

Die Verschäumergebnisse zeigen, dass sich durch Zugabe der erfindungsgemäßen Additive PU-Schäume mit verminderten Formaldehydemissionen herstellen lassen, bei denen die Acetaldehydemissionen nicht negativ beeinflusst werden.

## Patentansprüche

1. Verfahren zur Herstellung von Polyurethan-Systemen durch Umsetzung mindestens einer Polyolkomponente mit mindestens einer Isocyanatkomponente in Gegenwart eines oder mehrerer Katalysatoren, die die Reaktionen Isocyanat-Polyol und/oder Isocyanat-Wasser und/oder die Isocyanat-Trimerisierung katalysieren, **dadurch gekennzeichnet, dass** die Umsetzung in Gegenwart einer oder mehrer Verbindungen durchgeführt wird, die durch Umsetzung eines Guanidinsalzes mit einem Polyamin erhältlich ist.

2. Verfahren nach Anspruch 1, **dadurch gekennzeichnet, dass** als Polyamin eine Verbindung der Formel (I)
H₂N-CH₂-CH₂-NH-(CH₂-CH₂-NH)ₓ-CH₂-CH₂-NH₂ (I)
mit x = 0 bis 4, vorzugsweise 1 bis 3, insbesondere 1 eingesetzt wird.

3. Verfahren nach Anspruch 1 oder 2, **dadurch gekennzeichnet, dass** bei der Umsetzung des Guanidinsalzes mit dem Polyamin das molare Verhältnis von Guanidinsalzen zu den Polyaminen 5 zu 1 bis 1 zu 5, vorzugsweise 1 zu 1 bis 1 zu 3, insbesondere 2 zu 3 bis 1 zu 3 beträgt.

4. Verfahren gemäß zumindest einem der Ansprüche 1 bis 3, **dadurch gekennzeichnet, dass** als Guanidinsalz Guanidinhydrochlorid, -sulfamat, -phosphat, -acetat, -carbonat, -sulfat, -thiocyanat oder-nitrat, insbesondere Guanidinhydrochlorid eingesetzt wird.

5. Verfahren gemäß zumindest einem der Ansprüche 1 bis 4, **dadurch gekennzeichnet, dass** die Umsetzung in Gegenwart zumindest einer Verbindung der Formel (II)
H[-(HN-CH₂-CH₂)ₐ-NH-C(=NHR⁺X⁻)]_{c}-NH-(CH₂-CH₂-NH-)_{b}H (II)
die durch Umsetzung eines Guanidinsalzes mit einer Verbindung der Formel (I) erhältlich ist, erfolgt, mit
a = unabhängig voneinander 0 bis 6, vorteilhafterweise 2 bis 6, vorzugsweise 3 bis 5, insbesondere 3 oder 4
b = unabhängig voneinander 0 bis 6, vorteilhafterweise 2 bis 6, vorzugsweise 3 bis 5, insbesondere 3 oder 4
c = unabhängig voneinander 1 bis 4, vorzugsweise 1 oder 2, bevorzugt 1,
R = H oder (CH₂-CH₂-NH-)_{d}H, insbesondere H,
d = unabhängig voneinander 0 bis 6, vorteilhafterweise 2 bis 6, vorzugsweise 3 bis 5, insbesondere 3 oder 4,
a und b können gleich 0 sein, wenn d > 0 und R ungleich H, oder d und b können gleich 0 sein, wenn a > 0, oder d und a können gleich 0 sein, wenn b > 0 ist,
X⁻ = Anion, bevorzugt ein Halogenid, besonders Chlorid.

6. Verfahren nach Anspruch 5, **dadurch gekennzeichnet, dass** in der Verbindung der Formel (II) a = b ist, mit a = b = 2 bis 6, vorzugsweise 3 bis 5, insbesondere 3 oder 4, wobei c vorzugweise gleich 1 oder 2 ist und R vorzugsweise = H ist.

7. Verfahren nach mindestens einem der Ansprüche 1 bis 6, **dadurch gekennzeichnet, dass** Verbindungen der Formel (II) einen Anteil von mindestens 40 Gew.-%, vorzugsweise 50 bis 98 Gew.-%, insbesondere 60 bis 80 Gew.%, an den durch Umsetzung eines Guanidinsalzes mit einer Verbindung der Formel (I) erhältlichen Verbindungen ausmachen.

8. Verfahren nach zumindest einem der Ansprüche 1 bis 7, **dadurch gekennzeichnet, dass** die durch Umsetzung eines Guanidinsalzes mit dem Polyamin erhältlichen Verbindungen in einem Massenanteil von 0,01 bis 5 Teilen, vorzugsweise von 0,1 bis 3 insbesondere von 0,5 bis 1,5 bezogen auf 100 Teile Polyolkomponente eingesetzt werden.

9. Verfahren nach mindestens einem der vorangegangenen Ansprüche, **dadurch gekennzeichnet, dass** als Polyurethansystem ein Polyurethanschaum hergestellt wird.

10. Polyurethansystem, hergestellt gemäß einem Verfahren nach einem der Ansprüche 1 bis 9.

11. Polyurethansystem nach Anspruch 10, **dadurch gekennzeichnet, dass** es von 0,001 bis 10 Gew.-%, vorzugsweise 0,01 bis 5 Gew.-%, insbesondere 0,1 bis 3 Gew.-% an durch Umsetzung eines Guanidinsalzes mit einem Polyamin erhältlichen Verbindungen aufweist.

12. Polyurethansystem nach einem der Ansprüche 10 oder 11, **dadurch gekennzeichnet, dass** das Polyurethansystem ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum, bevorzugt ein Polyurethan HR-Schaum ist.

13. Verwendung von Polyurethansystemen gemäß zumindest einem der Ansprüche 10 bis 12 als Kühlschrankisolierung, Dämmplatte, Sandwichelement, Rohrisolation, Sprühschaum, 1- & 1,5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber oder zur Herstellung entsprechender Produkte.

14. Verfahren zur Erniedrigung der Aldehydgesamtemission, insbesondere Aldehydemissionen umfassend Formaldehyd, Acetaldehyd, Acrolein und Benzaldehyd, aus Polyurethansystemen, insbesondere Polyurethanschaumstoffen, durch Zugabe von Guanidinumsetzungsprodukten, wie in einem der Ansprüche 1 bis 9 angegeben, zu dem Polyurethansystem, insbesondere Polyurethanschaumstoff, vorzugsweise in einer Menge von 0,001 bis 10 Gew.-%, vorteilhafterweise 0,01 bis 5 Gew.-%, insbesondere 0,1 bis 3 Gew.-%, bezogen auf das Gesamtgewicht des Polyurethansystems, insbesondere Polyurethanschaumstoffs, wobei die Zugabe vor, während oder nach der Herstellung des Polyurethansystems, insbesondere des Polyurethanschaumstoffs, erfolgen kann.

15. Verwendung von Guanidinumsetzungsprodukten, wie in einem der Ansprüche 1 bis 9 angegeben, zur Herstellung von Polyurethansystemen, insbesondere Polyurethanschaumstoffen , die emissionsarm bezüglich Aldehyden sind, insbesondere umfassend Formaldehyd, Acetaldehyd, Acrolein und Benzaldehyd.

## Claims

1. Process for production of polyurethane systems by reacting at least one polyol component with at least one isocyanate component in the presence of one or more catalysts for the isocyanate-polyol and/or isocyanate-water reactions and/or the trimerization of isocyanate, **characterized in that** said reacting is carried out in the presence of one or more compounds obtainable by reacting a guanidine salt with a polyamine.

2. Process according to Claim 1, **characterized in that** the polyamine used is a compound of formula (I) H₂N-CH₂-CH₂-NH- (CH₂-CH₂-NH)ₓ-CH₂-CH₂-NH₂ (I) where x = 0 to 4, preferably 1 to 3, especially 1.

3. Process according to Claim 1 or 2, **characterized in that** said reacting the guanidine salt with the polyamine is carried out with a molar ratio of guanidine salts to the polyamines which is in the range from 5:1 to 1:5, preferably from 1:1 to 1:3 and especially from 2:3 to 1:3.

4. Process according to at least one of Claims 1 to 3, **characterized in that** the guanidine salt used is guanidine hydrochloride, guanidine sulphamate, guanidine phosphate, guanidine acetate, guanidine carbonate, guanidine sulphate, guanidine thiocyanate or guanidine nitrate, in particular guanidine hydrochloride.

5. Process according to at least one of Claims 1 to 4, **characterized in that** said reacting is effected in the presence of at least one compound of formula (II)
H[-(HN-CH₂-CH₂)ₐ-NH-C (=NHR⁺X⁻)]_{c}-NH-(CH₂-CH₂-NH-)_{b}H (II)
which is obtainable by reacting a guanidine salt with a compound of formula (I), where
a = independently 0 to 6, advantageously 2 to 6, preferably 3 to 5, especially 3 or 4
b = independently 0 to 6, advantageously 2 to 6, preferably 3 to 5, especially 3 or 4
c = independently 1 to 4, preferably 1 or 2, preferably 1,
R = H or (CH₂-CH₂-NH-)_{d}H, in particular H,
d = independently 0 to 6, advantageously 2 to 6, preferably 3 to 5, in particular 3 or 4,
a and b may each be 0 when d > 0 and R is not H, or d and b may each be 0 when a > 0, or d and a may each be 0 when b > 0,
X⁻ = anion, preferably a halide, particularly chloride.

6. Process according to Claim 5, **characterized in that** a is = b in the compound of formula (II), with a = b = 2 to 6, preferably 3 to 5, in particular 3 or 4, while c is preferably equal to 1 or 2 and R is preferably = H.

7. Process according to at least one of Claims 1 to 6, **characterized in that** compounds of formula (II) comprise at least 40 wt%, preferably 50 to 98 wt%, in particular 60 to 80 wt% of compounds obtainable by reacting a guanidine salt with a compound of formula (I).

8. Process according to at least one of Claims 1 to 7, **characterized in that** the compounds obtainable by reacting a guanidine salt with the polyamine are used in a mass fraction of 0.01 to 5 parts, preferably of 0.1 to 3 especially of 0.5 to 1.5 based on 100 parts of polyol component.

9. Process according to at least one preceding claim, **characterized in that** the polyurethane system produced is a polyurethane foam.

10. Polyurethane system obtainable by a process according to any of Claims 1 to 9.

11. Polyurethane system according to Claim 10, **characterized in that** it includes from 0.001 to 10 wt%, preferably 0.01 to 5 wt%, especially 0.1 to 3 wt% of compounds obtainable by reacting a guanidine salt with a polyamine.

12. Polyurethane system according to either Claim 10 or 11, **characterized in that** the polyurethane system is a rigid polyurethane foam, a flexible polyurethane foam, a viscoelastic foam, an HR foam, a semi-rigid polyurethane foam, a thermoformable polyurethane foam or an integral foam, preferably an HR polyurethane foam.

13. Use of polyurethane systems according to one or more of Claims 10 to 12 as refrigerator insulation, insulation panel, sandwich element, pipe insulation, spray foam, 1- and 1.5-component can foam, wood imitation, modelling foam, packaging foam, mattress, furniture cushioning, automotive seat cushioning, headrest, dashboard, automotive interior, automotive roof liner, sound absorption material, steering wheel, shoe sole, carpet backing foam, filter foam, sealing foam, sealant and adhesive or for producing corresponding products.

14. Process for reducing aldehyde total emission, in particular aldehyde emissions comprising formaldehyde, acetaldehyde, acrolein and benzaldehyde, from polyurethane systems, in particular polyurethane foams, by admixture to the polyurethane system, in particular the polyurethane foam, of guanidine reaction products as recited in any of Claims 1 to 9, preferably in an amount of 0.001 to 10 wt%, advantageously 0.01 to 5 wt%, especially 0.1 to 3 wt%, based on the overall weight of the polyurethane system, in particular of the polyurethane foam, wherein the admixture may take place before, during or after the production of the polyurethane system, especially of the polyurethane foam.

15. Use of guanidine reaction products as recited in any of Claims 1 to 9 for production of polyurethane systems, in particular polyurethane foams, that are low-emission with regard to aldehydes including, in particular, formaldehyde, acetaldehyde, acrolein and benzaldehyde.

## Revendications

1. Procédé pour la préparation de systèmes de polyuréthane par transformation d'au moins un composant polyol avec au moins un composant isocyanate en présence d'un ou de plusieurs catalyseurs, qui catalysent les réactions isocyanate-polyol et/ou isocyanate-eau et/ou la trimérisation d'isocyanates, **caractérisé, en ce que** la transformation est réalisée en présence d'un ou de plusieurs composés, qui peuvent être obtenus par transformation d'un sel de guanidine avec une polyamine.

2. Procédé selon la revendication 1, **caractérisé en ce qu'**on utilise, comme polyamine, un composé de formule (I) H₂N-CH₂-CH₂-NH- (CH₂-CH₂-NH)ₓ-CH₂-CH₂-NH₂ (I) dans laquelle x = 0 à 4, de préférence 1 à 3, en particulier 1.

3. Procédé selon la revendication 1 ou 2, **caractérisé en ce que** lors de la transformation du sel de guanidine avec la polyamine, le rapport molaire de sels de guanidine aux polyamines vaut 5:1 à 1:5, de préférence 1:1 à 1:3, en particulier 2:3 à 1:3.

4. Procédé selon au moins l'une quelconque des revendications 1 à 3, **caractérisé en ce qu'**on utilise, comme sel de guanidine, le chlorhydrate, le sulfamate, le phosphate, l'acétate, le carbonate, le sulfate, le thiocyanate ou le nitrate de guanidine, en particulier le chlorhydrate de guanidine.

5. Procédé selon au moins l'une quelconque des revendications 1 à 4, **caractérisé en ce que** la transformation est réalisée en présence d'au moins un composé de formule (II), dans laquelle
H [HN-CH₂-CH₂)ₐ-NH-C (=NHR⁺X⁻)]_{c}-NH-(CH₂-CH₂-NH-)_{b}H (II)
qui peut être obtenu par transformation d'un sel de guanidine avec un composé de formule (I),
a = indépendamment, 0 à 6, avantageusement 2 à 6, de préférence 3 à 5, en particulier 3 ou 4
b = indépendamment, 0 à 6, avantageusement 2 à 6, de préférence 3 à 5, en particulier 3 ou 4
c = indépendamment, 1 à 4, de préférence 1 ou 2, de préférence 1,
R = H ou (CH₂-CH₂-NH-)_{d}H, en particulier H,
d = indépendamment, 0 à 6, avantageusement 2 à 6, de préférence 3 à 5, en particulier 3 ou 4,
a et b peuvent valoir 0, lorsque d > 0 et R ne représente pas H, ou d et b peuvent valoir 0, lorsque a > 0, ou d et a peuvent valoir 0, lorsque b > 0, X⁻ = anion, de préférence un halogénure, en particulier chlorure.

6. Procédé selon la revendication 5, **caractérisé en ce que** dans le composé de formule (II) a = b, avec a = b = 2 à 6, de préférence 3 à 5, en particulier 3 ou 4, c valant de préférence 1 ou 2 et R = de préférence H.

7. Procédé selon au moins l'une quelconque des revendications 1 à 6, **caractérisé en ce que** les composés de formule (II) représentent une proportion d'au moins 40% en poids, de préférence de 50 à 98% en poids, en particulier de 60 à 80% en poids, des composés pouvant être obtenus par transformation d'un sel de guanidine avec un composé de formule (I).

8. Procédé selon au moins l'une quelconque des revendications 1 à 7, **caractérisé en ce que** les composés pouvant être obtenus par transformation d'un sel de guanidine avec la polyamine sont utilisés en une proportion massique de 0,01 à 5 parties, de préférence de 0,1 à 3 parties, en particulier de 0,5 à 1,5 partie, par rapport à 100 parties de composant polyol.

9. Procédé selon au moins l'une quelconque des revendications précédentes, **caractérisé en ce qu'**on prépare, comme système de polyuréthane, une mousse de polyuréthane.

10. Système de polyuréthane, préparé selon un procédé selon l'une quelconque des revendications 1 à 9.

11. Système de polyuréthane selon la revendication 10, **caractérisé en ce qu'**il présente 0,001 à 10% en poids, de préférence 0,01 à 5% en poids, en particulier 0,1 à 3% en poids de composés pouvant être obtenus par transformation d'un sel de guanidine avec une polyamine.

12. Système de polyuréthane selon l'une quelconque des revendications 10 à 11, **caractérisé en ce que** le système de polyuréthane est une mousse dure de polyuréthane, une mousse souple de polyuréthane, une mousse viscoélastique, une mousse HR, une mousse de polyuréthane semi-dure, une mousse de polyuréthane thermoformable ou une mousse intégrale, de préférence une mousse HR de polyuréthane.

13. Utilisation de systèmes de polyuréthane selon au moins l'une quelconque des revendications 10 à 12 comme isolation de réfrigérateur, panneau d'isolation, élément sandwich, isolation de tuyaux, mousse à pulvériser, mousse dosée à 1 et 1,5 composant, imitation du bois, mousse pour modélisation, mousse d'emballage, matelas, rembourrage de meuble, rembourrage de siège de voiture, appuie-tête, tableau de bord, revêtement interne de voiture, ciel de voiture, matériau d'absorption du bruit, volant, semelle de chaussure, mousse pour face arrière de tapis, mousse de filtre, mousse d'étanchéité, agent d'étanchéité et adhésif ou pour la préparation des produits correspondants.

14. Procédé pour abaisser l'émission totale d'aldéhydes, en particulier les émissions d'aldéhydes comprenant du formaldéhyde, de l'acétaldéhyde, de l'acroléine et du benzaldéhyde, à partir de systèmes de polyuréthane, en particulier de mousses de polyuréthane, par addition de produits de transformation à base de guanidine, tels qu'indiqués dans l'une quelconque des revendications 1 à 9, au système de polyuréthane, en particulier à la mousse de polyuréthane, de préférence en une quantité de 0,001 à 10% en poids, avantageusement de 0,01 à 5% en poids, en particulier de 0,1 à 3% en poids, par rapport au poids total du système de polyuréthane, en particulier de la mousse de polyuréthane, l'addition pouvant avoir lieu avant, pendant ou après la préparation du système de polyuréthane, en particulier de la mousse de polyuréthane.

15. Utilisation de produits de transformation de guanidine, tels qu'indiqués dans l'une quelconque des revendications 1 à 9, pour la préparation de systèmes de polyuréthane, en particulier de mousses de polyuréthane, qui sont pauvres en émissions en ce qui concerne les aldéhydes, comprenant en particulier le formaldéhyde, l'acétaldéhyde, l'acroléine et le benzaldéhyde.
